# FASCICULE DE BREVET EUROPEEN

(11) **EP 0 503 993 B1**
(45) Date de publication et mention de la délivrance du brevet: **02.11.1994**
(21) Numéro de dépôt: 92400511.9
(22) Date de dépôt: 27.02.1992
(51) Int. Cl.: B60K 20/08, B60R 21/09

(54) **Dispositif de fixation d'un levier de commande de boîte de vitesses à proximité d'une planche de bord de véhicule**
Vorrichtung zum Befestigen eines Getriebeschalthebels neben einem Armaturenbrett eines Fahrzeuges
Device for mounting a gear shift lever close to a vehicle dashboard

(30) Priorité: 12.03.1991 FR 9102963
(43) Date de publication de la demande: 16.09.1992
(73) Titulaire: AUTOMOBILES PEUGEOT, 75116 Paris (FR); AUTOMOBILES CITROEN, 92200 Neuilly-sur-Seine (FR)
(72) Inventeur: Anger, Gérard, F-78480 Verneuil sur Seine (FR)
(74) Mandataire: Beauchamps, Georges

(56) Documents cités:
- DE-A- 2 252 391
- FR-A- 2 077 082
- FR-A- 2 286 020

## Description

La présente invention concerne un dispositif de fixation d'un levier de commande de boîte de vitesses à proximité d'une planche de bord de véhicule.

On connaît depuis longtemps des leviers de commande de boîte de vitesses pour véhicules automobiles par exemple, qui sont montés sur la caisse du véhicule par l'intermédiaire d'un support formant palier d'articulation telle qu'une rotule. Le plus souvent, le support du levier est fixé sur le bossage du plancher de la caisse entre les sièges avant, à l'aide de moyens de fixation tels que des ensembles vis-écrous.

On connaît également un dispositif de fixation décrit dans le document FR-A-2 077 082, pour un levier de commande de boîte de vitesses monté sur un véhicule, dans lequel le levier à pommeau de manoeuvre est monté sur un support escamotable formant articulation, ledit levier étant relié à la caisse du véhicule par des moyens de fixation comprenant un organe effaçable dit fusible immobilisant le levier à pommeau par rapport à la caisse de façon que, lors d'un impact éventuel d'un passager avant du véhicule sur le pommeau en cas de choc frontal du véhicule, le fusible s'efface pour permettre l'escamotage du levier.

Cependant, les dispositifs connus de fixation de leviers de vitesses rendent difficiles les opérations de montage et de démontage de la commande, sont souvent fixés à l'aide d'ensembles vis-écrous dont la mise en place est peu aisée, et en outre ne permettent pas le montage du levier de vitesses à proximité de la planche de bord sans s'écarter des exigences des règlements en vigueur concernant la sécurité des occupants d'un véhicule ou sans modifier la liaison entre le levier et son support formant articulation.

La présente invention a donc pour but de proposer un dispositif de fixation dont les opérations de montage et de démontage sont aisées et ne nécessitent pas d'ensemble vis-écrous, et qui permette d'éviter toute blessure des passagers avant, à la tête ou en haut du tronc, lors d'un choc frontal du véhicule, conformément aux exigences des règlements de sécurité.

A cet effet, la présente invention a pour objet un dispositif de fixation d'un levier de commande de boîte de vitesses à proximité d'une planche de bord de véhicule, ledit dispositif comprenant un support, des moyens de fixation et un organe dit fusible effaçable, lors d'un impact éventuel d'un passager avant du véhicule sur le levier à pommeau de manoeuvre, pour permettre l'escamotage dudit levier, ce dernier étant monté sur ledit support formant articulation relié à la caisse du véhicule par les moyens de fixation, caractérisé en ce que les moyens de fixation comprennent d'une part une glissière dont un élément fixe est solidaire de la caisse et un élément déplaçable est solidaire du support, et d'autre part ledit organe effaçable dit fusible, immobilisant l'élément déplaçable par rapport à l'élément fixe, la glissière étant à la fois agencée à proximité d'un plan passant par le pommeau en position moyenne et orientée sensiblement suivant une direction parallèle à la direction d'un impact éventuel d'un passager avant du véhicule sur le pommeau en cas de choc frontal du véhicule, de façon que lors dudit impact le fusible s'efface pour permettre l'escamotage du levier par coulissement du support.

Le dispositif conforme à l'invention est caractérise de préférence en ce que le mécanisme de transmission qui raccorde le levier à la boîte de vitesses en permettant le libre coulissement de l'élément déplaçable lors de l'impact, est constitué par deux câbles ou analogues.

Le dispositif est encore caractérisé en ce que la glissière est orientée sensiblement suivant la direction d'un impact sur le pommeau du levier en position moyenne, afin de garantir un coulissement aisé de l'élément déplaçable.

Suivant une autre caractéristique préférée de l'invention, le fusible est constitué par un organe sécable tel que goupille, agrafe ou analogues, reliant les éléments fixes et déplaçables et pouvant se rompre sous un impact prédéterminé.

Suivant encore une autre caractéristique préférée de l'invention, le fusible est constitué par un organe effaçable par déformation sous un impact prédéterminé, tel que clip ou analogues.

On précisera ici que le fusible est intégré à l'un des éléments fixe ou déplaçable de la glissière, et de préférence à l'élément déplaçable.

L'invention se caractérise en ce que la glissière est constituée par une pièce mâle en matière plastique montée à coulissement dans une pièce femelle en métal telle qu'un profilé.

L'invention se caractérise en outre en ce que la glissière est constituée par une pièce métallique mâle, montée à coulissement dans une pièce métallique femelle, telles que deux tronçons de profilé emboîtables.

On remarquera enfin que la glissière comporte des pions disposés entre l'élément fixe et l'élément déplaçable de façon à amortir par frottement l'escamotage du levier.

Mais d'autres caractéristiques et avantages de l'invention ressortiront mieux de la description détaillée donnée uniquement à titre d'exemple, qui suit et se réfère aux dessins annexes dans lesquels :
La figure 1 est une vue de côte simplifiée d'un avant d'habitacle de véhicule automobile équipé du dispositif de fixation de levier de vitesses conforme à l'invention.
La figure 2 est une vue partielle, suivant la flèche II de la figure 1 d'un premier mode de réalisation du dispositif conforme à l'invention.
La figure 3 est une vue en coupe simplifiée, suivant la ligne III-III de la figure 2.
La figure 4 est une vue similaire à la figure 2, mais représentant un autre mode de réalisation de l'invention.
La figure 5 est une vue en coupe suivant la ligne V-V de la figure 4.

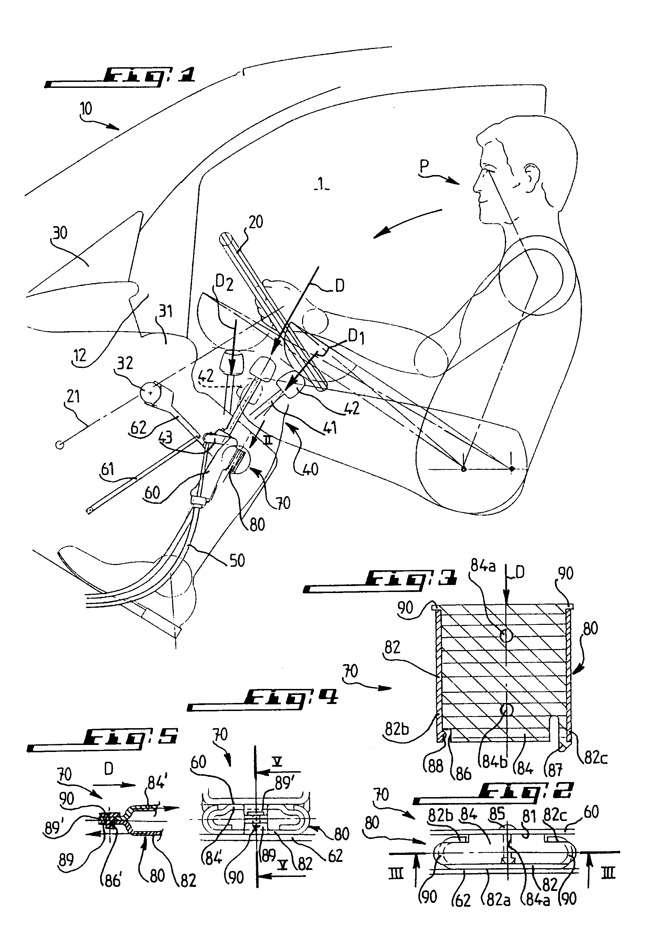

En se reportant tout d'abord à la figure 1, on voit la partie avant de l'habitacle 1 d'un véhicule automobile 10. On a désigné en P un manequin installé dans l'hâbitacle 1, à la place d'un passager avant ou conducteur du véhicule 10. Le manequin P est installé en face d'une planche de bord 30 du véhicule 10, avec un volant de direction 20 entre ses mains. Le volant 20 est monté sur la planche de bord 30 par l'intermédiaire d'une colonne de direction illustrée par un axe 21. Comme ceci est souvent le cas, la planche de bord 30 est constituée par une planche en matière plastique 31 qui est fixée à la caisse 12 du véhicule à l'aide d'une traverse de renforcement 32.

On a prévu dans l'habitacle 1 du véhicule 10, un levier de commande 40 qui est raccordé à une boîte de vitesses du véhicule 10 par l'intermédiaire d'un mécanisme de transmission 50. Le levier de vitesses 40 est constitué par une tige 41 à l'extrémité libre de laquelle est fixé un pommeau de manoeuvre 42. L'extrémité du levier 40 qui est opposée au pommeau 42 est articulée, à l'aide d'une rotule 43, ou d'axes perpendiculaires sur un support 60 solidaires de la caisse 12 du véhicule. Le support 60 forme donc un palier d'articulation permettant le déplace- ment du levier 40 lors des changements de rapports de la boîte de vitesses. Sur la figure 1, la référence numérique 70 désigne des moyens de fixation du support 60 sur la caisse 12 du véhicule, qui vont maintenant être décrits.

Conformément à la présente invention, le levier de commande 40 est disposé à proximité de la planche de bord 30, c'est-à-dire dans une zone de l'habitacle 1 telle que la tête et le haut du tronc du passager P risquent de venir violemment percuter le pommeau 42 du levier, en cas de choc frontal du véhicule 10.

Sur la figure 1, différentes directions d'impact du passager sur le levier 40 ont été représentées, en fonction des différentes positions possibles du levier de commande 40. La direction D correspond à l'impact du passager P sur le pommeau 42 du levier de commande, lorsque celui-ci est en position moyenne, telle que par exemple de point mort. La direction D1 indique l'orientation de l'impact du passager sur le pommeau 42, alors que le levier 40 est tiré vers l'arrière, et D2 indique la direction de l'impact avec le levier de commande 40 poussé vers l'avant du véhicule.

En se reportant aux figures, on voit que les moyens de fixation 70 sont constitués notamment par une glissière 80 qui est orientée sensiblement suivant la direction D d'un impact éventuel du passager avant P, et par un organe effaçable 90 appelé "fusible", qui immobilise la glissière 80 et donc le support 60 du levier de commande par rapport à la caisse 12 du véhicule. Comme visible sur la figure 1, la glissière 80 est raccordée à la caisse 12 et à la traverse 32 par deux tringles d'ancrage 61 et 62, respectivement.

Grâce à cette glissière 80, qui est orientée sensiblement suivant la direction D de l'impact, ainsi qu'au fusible 90 dont les dimensions et la forme sont calculées pour que le fusible s'efface lors d'un impact de valeur prédéterminée afin de ne plus faire obstacle au coulissement de la glissière 80, l'ensemble formé par le levier 40 et le support 60 peut librement s'escamoter en cas d'impact de la tête et/ou du buste du passager avant P lors d'un choc frontal du véhicule.

Evidemment, pour que l'escamotage par coulissement de l'ensemble levier-support soit possible, le mécanisme de transmission 50 ne doit pas s'opposer au coulissement de la glissière 80. A cet effet, le mécanisme de transmission 50 représenté sur la figure 1 est constitué par un système de câbles flexibles. D'autres mécanismes de transmission analogues, tels que des mécanismes déformables, flexibles ou déconnectables, peuvent également être employés.

En se reportant aux figures 2 et 3, on voit que la glissière 80 est composée d'un élément fixe 82 solidaire de la caisse 12 du véhicule, et d'un élément déplaçable 84 sur lequel est fixé le support du levier 40. L'élément fixe 82 est fixé à la tringle d'ancrage 62 qui est solidaire de la caisse 12 par l'intermédiaire notamment de la traverse de renforcement 32. Par ailleurs, le support 60 est fixé à l'élément déplaçable 84 de la glissière.

Suivant le premier mode de réalisation représenté, l'élément déplaçable 84 qui constitue la pièce mâle de la glissière 80, est formé par un patin en matière plastique, ci-après désigné galet, qui présente, suivant une section perpendiculaire à la direction D, un profil oblong. L'élément fixe 82 est un profilé métallique qui fait office de rail de guidage pour le galet déplaçable 84. Comme visible sur la figure 2, le profilé métallique 82 présente une âme 82a de forme plane qui s'étend suivant la direction D. L'âme 82a rejoint deux rebords arrondis 82b et 82c qui sont recourbés vers l'intérieur en forme de U de façon à enserrer avec un faible jeu les parties latérales arrondies du galet déplaçable 84. Le galet déplaçable 84 est monté à coulissement dans le profilé 82 et présente, suivant la direction D, une longueur suffisante pour assurer son coulissement à l'intérieur du profilé sans arc-boutement. On a désigné en 81 une face du galet déplaçable 84 qui est opposée à l'âme 82a du profilé 82 et qui fait saillie de ce dernier, entre les rebords 82b et 82c. Deux perçages 84a et 84b alignés suivant la direction D et s'étendant suivant un plan perpendiculaire à l'âme 82a sont formés dans le galet déplaçable 84. Les perçages 84a et 84b traversent le galet 84 de part en part et permettent le montage du support du levier 40 sur la face 81, à l'aide de deux rivets respectivement logés dans l'un des perçages et désignés par la référence 85. Il va de soi que les rivets 85 peuvent être remplacés par des vis ou par d'autres moyens de fixation appropriés.

L'organe effaçable ou fusible est constitué suivant ce mode de réalisation par deux pattes 90 qui sont intégrées au galet déplaçable 84. Les deux pattes 90 s'étendent suivant un plan perpendiculaire à la direction D à l'extrémité du galet déplaçable 84 la plus proche du levier 40. Les pattes ou fusibles 90 font saillie de part et d'autre du galet 84 de façon à venir reposer contre les rebords arrondis 82b et 82c respectivement. On comprend donc déjà qu'en l'absence d'impacts violents du passager P sur le levier, les pattes ou fusibles 90 empêchent tout coulissement du galet 84 à l'intérieur du profilé 82 suivant le sens indiqué par la flèche D sur la figure 3.

A l'extrémité du galet déplaçable 84 qui est opposé aux pattes ou fusibles 90 sont formés d'une part un évidement 86 et d'autre part une languette élastique à crochet 87. L'évidement 86 du galet 84 coopére avec un pion 88 en saillie de l'intérieur du rebord arrondi 82b. Le pion 88 possède des dimensions et une forme déterminées pour que le pion agisse comme un frotteur. Ainsi, il est possible de rendre l'escamotage du levier 40 en cas d'impact, plus progressif. La languette élastique 87 vient se clipper sur l'extrémité du rebord arrondi 82c qui est opposée à l'extrémité sur laquelle repose une des pattes ou fusibles 90. On comprend bien en regardant la figure 3 que la languette élastique 87 qui présente à son extrémité une forme profilée en biseau se déforme élastiquement lorsque le galet déplaçable 84 pénètre dans le profilé 82, et fait saillie du rebord 82c lors de son clippage, afin d'empêcher tout coulissement du galet 84 suivant une direction opposée à D. Le galet 84 est donc enserré et immobilisé entre d'une part les fusibles et d'autre part la languette 87.

En se reportant maintenant aux figures 4 et 5, un deuxième mode de réalisation de l'invention va maintenant être décrit. Suivant ce deuxième mode réalisation, la glissière 80 est constituée par un profilé 82 similaire à celui décrit dans le premier mode de réalisation et également fixé à la tringle d'ancrage 62. L'élément déplaçable de la glissière 80 a ici la forme d'un autre profilé métallique 84' de section oblongue. Le profilé métallique 84' est fixé au support 60 du levier 40. Le profilé 82 qui est fixé à la tringle d'ancrage 62 est la partie femelle de la glissière 80 tandis que le profilé métallique 84' qui est monté à coulissement dans l'élément fixe 82 en constitue la partie mâle. A l'extrémité de la glissière 80 qui est en regard du levier 40, les profilés oblongs 82 et 84' comportent chacun une patte 89 et 89' ; respectivement. Comme visible sur la figure 5, les pattes 89 et 89' s'étendent suivant la direction D et présentent, en section suivant cette direction, une forme coudée symétriquement l'une par rapport à l'autre. Comme visible sur la figure 5, les pattes coudées 89 et 89' forment ensemble un Y dont la branche médiane est constituée par les extrémités de ces pattes. Un perçage 86' est formé au travers des pattes 89 et 89'. Une goupille formant fusible 90 est logée dans le perçage 86'. Evidemment, bien que le fusible 90 soit constitué suivant l'exemple illustré par une goupille, celui-ci peut être également constitué par une agrafe ou analogues.

Les fusibles 90 qui ont été décrits et illustrés en se reportant aux figures 2 à 5 ont suivant la direction D une section qui présente une résistance telle que sous un impact prédéterminé de la tête ou du haut du tronc du passager P, ceux-ci se rompent pour permettre le libre coulissement des éléments 84 et 84' par rapport aux éléments fixes 82. Ainsi, puisque le profilé 82 est fixe, en cas d'impact l'ensemble levier 40-support 60 auquel est fixé l'élément déplaçable 84 ou 84', transmet aux fusibles 90 des efforts dirigés suivant D et dont l'intensité est telle qu'ils se rompent. Dans le cas illustré sur les figures 2 et 3, les pattes 90 cèderont sous l'effet d'une contrainte de flexion, tandis que la goupille 90 du deuxième mode de réalisation se rompra par cisaillement. Ces fusibles 90 sont donc des organes sécables qui relient les éléments fixes 82 et déplaçables 84, 84' de façon à soit les immobiliser les uns par rapport aux autres lors d'une utilisation normale du levier de vitesse 40, soit se sectionner en cas d'impact du passager P lors d'un choc frontal du véhicule. Le nombre de fusibles peut être différent de 1 ou 2, et ceux-ci peuvent également être constitués par un ou plusieurs organes effaçables par déformation élastique sous l'effet de l'impact prédéterminé, tel que des clips ou analogues.

Bien que suivant les exemples illustrés, la glissière 80 est orientée suivant la direction D correspondant à l'impact du passager P avec le pommeau du levier 40 lorsque celui-ci se trouve en position moyenne, l'orientation de la glissière 80 peut également être faite suivant d'autres directions d'impact telles que par exemple D1 ou D2. De préférence, la direction du coulissement de la glissière 80 sera choisie de façon à éviter tout arc-boutement de son élément déplaçable sous l'effet de l'impact. Ainsi, la glissière est de préférence agencée à proximité d'un plan passant par le pommeau en position moyenne et parallèle à la direction D. Il est ainsi possible de garantir un escamotage parfait de l'ensemble support-levier lors d'un impact.

On peut également prévoir sur la glissière 80 une pluralité de pions frotteurs tels que celui qui est désigné en 88, afin d'obtenir un effet d'amortissement optimal de la tête ou des parties hautes du tronc du passager P lors de son impact sur le pommeau 42.

Bien entendu, l'invention n'est nullement limitée aux modes de réalisation illustrés qui n'ont été donnés qu'à titre d'exemple. Ainsi, les fusibles peuvent être montés ou intégrés soit sur l'élément fixe soit sur l'élément déplaçable de la glissière.

Au contraire, l'invention comprend tous les équivalents techniques des moyens décrits ainsi que leurs combinaisons si celles-ci sont couvertes par les revendications suivantes.

## Revendications

1. Dispositif de fixation d'un levier de commande de boîte de vitesses à proximité d'une planche de bord (30) de véhicule, ledit dispositif comprenant un support (60), des moyens de fixation (70) et un organe dit fusible (90) effaçable, lors d'un impact éventuel d'un passager avant (P) du véhicule (10) sur le levier (40) à pommeau de manoeuvre (42), pour permettre l'escamotage dudit levier, ce dernier étant monté sur ledit support formant articulation relié à la caisse (12) du véhicule par lesdits moyens de fixation, caractérisé en ce que les moyens de fixation comprennent d'une part une glissière (80) dont un élément fixe (82) est solidaire de la caisse (12) et un élément déplaçable (84, 84') est solidaire du support, et d'autre part ledit organe effaçable dit fusible (90) immobilisant l'élément déplaçable (84, 84') par rapport à l'élément fixe (82), la glissière (80) étant à la fois agencée à proximité d'un plan passant par le pommeau (42) en position moyenne et orientée suivant une direction sensiblement parallèle à la direction (D, D1, D2) d'un impact éventuel d'un passager avant (P) du véhicule (10) sur le pommeau (42) en cas de choc frontal du véhicule, de façon que lors dudit impact, le fusible (90) s'efface pour permettre l'escamotage du levier (40) par coulissement du support (60).

2. Dispositif selon la revendication 1, caractérisé en ce qu'un mécanisme de transmission (50) qui raccorde le levier (40) à la boîte de vitesses en permettant le libre coulissement de l'élément déplaçable lors de l'impact, est constitué par deux câbles (50) ou analogues.

3. Dispositif selon la revendication 1 ou 2, caractérisé en ce que la glissière (80) est orientée sensiblement suivant la direction (D) d'un impact sur le pommeau (42) du levier en position moyenne, afin de garantir un coulissement aisé de l'élément déplaçable (84, 84') lors de l'impact.

4. Dispositif selon l'une des revendications 1 à 3, caractérisé en ce que le fusible (90) est constitué par au moins un organe sécable, tel que goupille, agrafe ou analogues reliant les éléments fixes (82) et déplaçables (84, 84') et pouvant se rompre sous un impact prédéterminé.

5. Dispositif selon l'une des revendications 1 à 3, caractérisé en ce que le fusible est constitué par un organe effaçable par déformation sous un impact prédéterminé, tel que clip ou analogues.

6. Dispositif selon l'une des revendications 1 à 5, caractérisé en ce que le fusible (90) est intégré à l'un (84) des éléments fixes ou déplaçables de la glissière (80), et de préférence à l'élément déplaçable (84).

7. Dispositif selon l'une des revendications 1 à 6, caractérisé en ce que la glissière (80) est constituée par une pièce mâle (84) en matière plastique montée à coulissement dans une pièce femelle en métal (82) telle qu'un profilé.

8. Dispositif selon l'une des revendications 1 à 6, caractérisé en ce que la glissière (80) est constituée par une pièce métallique mâle (84') montée à coulissement dans une pièce métallique femelle (82), telles que deux tronçons de profilé emboîtables.

9. Dispositif selon l'une des revendications précédentes, caractérisé en ce que la glissière comporte des pions (88) disposés entre l'élément fixe (82) et l'élément déplaçable (84, 84') de façon à amortir par frottement l'escamotage du levier (40).

## Claims

1. Device for the fastening of a gear shift lever for operating a gear box near a dashboard (30) of a vehicle, the said device comprising a support (60), fastening means (70) and a so-called fuse member (90) retractable upon a possible impact of a front passenger (P) of the vehicle (10) upon the lever (40) having an operating knob (42), to permit the retraction of the said lever, the latter being mounted onto the said support forming a pivotal connection connected to the body (12) of the vehicle by the said fastening means, characterized in that the fastening means comprise on the one hand a slide member (80), a stationary element (82) of which is made fast to the body (12) and a displaceable element (84, 84') which is made fast to the support, and on the other hand the retractable so-called fuse member (90) holding the displaceable element (84, 84') against motion with respect to the stationary element (82), the slide member (80), being both arranged near a plane passing through the knob (42) in the medium position and oriented in a direction substantially parallel to the direction (D, D1, D2) of a possible impinging of a front passenger (P) of the vehicle (10) upon the knob (42) in case of a frontal shock of the vehicle, so that upon the said impact, the fuse (90) retracts to permit the retraction of the lever (40) through the sliding of the support (60).

2. Device according to claim 1, characterized in that a transmission mechanism (50) which connects the lever (40) to the gear box while permitting the free sliding of the displaceable element during the impact is constituted by two wires (50) or the like.

3. Device according to claim 1 or 2, characterized in that the slide member (80) is oriented substantially in the direction (D) of an impact upon the knob (42) of the lever in the medium position in order to ensure an easy sliding of the displaceable element (84, 84') during the impact.

4. Device according to one of claims 1 to 3, characterized in that the fuse (90) is constituted by at least one sectile member such as a keeper pin, a cleat or the like connecting the stationary and displaceable elements (82) and (84, 84') and which may break under a predetermined impact.

5. Device according to one of claims 1 to 3, characterized in that the fuse is constituted by a member such as a clip or the like retractable through deformation under a predetermined impact.

6. Device according to one of claims 1 to 5, characterized in that the fuse (90) is integrated into one (84) of the stationary or displaceable elements of the slide member (80) and preferably into the displaceable element (84).

7. Device according to one of claims 1 to 6, characterized in that the slide member (80) is constituted by a male part (84) of plastics material mounted in sliding relationship into a female metal part (82) such as a sectional member.

8. Device according to one of claims 1 to 6, characterized in that the slide member (80) is constituted by a male metal part (84') mounted in sliding relationship in a female metal part (82) such as two nestable section portions.

9. Device according to one of the foregoing claims, characterized in that the slide member comprises protruding parts (88) disposed between the stationary element (82) and the displaceable element (84, 84') so as to dampen through friction the retraction of the lever (40).

## Patentansprüche

1. Vorrichtung zur Befestigung eines Getriebeschalthebels neben einem Armaturenbrett (30) eines Fahrzeugs wobei die besagte Vorrichtung einen Halter (60),Befestigungsmittel (70) und ein sogenanntes Sicherungsglied (90) aufweist, das bei einem etwaigen Aufprall eines vorderen Fahrgastes (P) des Fahrzeugs (10) auf dem Hebel (40) mit Betätigungsknopf (42) einziehbar ist, um das Einziehen des besagten Hebels zu gestatten, wobei der letztere an dem besagten, ein mit dem Wagenkasten (12) des Fahrzeugs durch die besagten Befestigungsmittel verbundenes Gelenk bildenden Halter angeordnet ist, dadurch gekennzeichnet, dass die Befestigungsmittel einerseits ein Gleitstück (80) von dem ein ortsfestes Element (82) mit dem Wagenkasten (12) fest verbunden ist und ein verschiebbares Element (84, 84') mit dem Halter fest verbunden ist und andererseits das besagte das verschiebbare Element (84, 84') in bezug auf das ortsfeste Element (82) festhaltende einziehbare sogenannte Sicherungsglied (90) umfasst, wobei das Gleitstück (80) gleichzeitig in der Nähe einer durch den Knopf (42) in der Mittelstellung führenden Ebene angeordnete und in einer mit der Richtung (D, D1, D2) eines etwaigen Aufprallens eines vorderen Fahrgastes (P) des Fahrzeugs (10) auf dem Knopf (42) im Fall eines Stirnstosses des Fahrzeugs ausgerichtet ist, so dass bei dem besagten Aufprallen, die Sicherung (90) sich einzieht, um das Einziehen des Hebels (40) durch Gleiten des Halters (60) zu gestatten.

2. Vorrichtung nach Anspruch 1, dadurch gekennzeichnet, dass ein Übertragungsmechanismus (50), der den Hebel (40) mit dem Getriebe verbindet bei Gestattung des freien Gleitens des verschiebbaren Elementes während des Aufprallens, durch zwei Drahtseile (50) oder dergleichen gebildet wird.

3. Vorrichtung nach Anspruch 1 oder 2, dadurch gekennzeichnet, dass das Gleitstück (80) etwa in der Richtung (D) eines Aufprallens auf dem Knopf (42) des Hebels in der mittleren Stellung ausgerichtet ist, um ein leichtes Gleiten des verschiebbaren Elementes (84, 84') während des Aufprallens zu gewährleisten.

4. Vorrichtung nach einem der Ansprüche 1 bis 3, dadurch gekennzeichnet, dass die Sicherung (90) durch wenigstens ein die ortsfesten und verschiebbaren Elemente (82) und (84, 84') verbindendes teilbares Glied, wie ein Vorteckstift, eine Klammer oder dergleichen, das bei einem vorbestimmten Aufprall brechen kann, gebildet wird.

5. Vorrichtung nach einem der Ansprüche 1 bis 3, dadurch gekennzeichnet, dass die Sicherung durch ein durch Verformung während eines vorbestimmten Aufprahls einziehbares Glied, wie eine Klemme oder dergleichen gebildet wird.

6. Vorrichtung nach einem der Ansprüche 1 bis 5 dadurch gekennzeichnet, dass die Sicherung (90) in einem (84) der ortsfesten oder verschiebbaren Elemente des Gleitstücks (80) und vorzugsweise in dem verschiebbaren Element (84) eingegliedert ist.

7. Vorrichtung nach einem der Ansprüche 1 bis 6, dadurch gekennzeichnet, dass das Gleitstück (80) durch einen gleitbar in einem weiblichen Metallteil (82) wie einem Profil gleitbar angeordneten männlichen Teil (84) aus Kunststoff gebildet wird.

8. Vorrichtung nach einem der Ansprüche 1 bis 6, dadurch gekennzeichnet, dass das Gleitstück (80) durch einen gleitbar in einem weiblichen Metallteil (82), wie zwei ineinanderfügbaren Profilabschnitten angeordneten männlichen Metallteil (84') gebildet wird.

9. Vorrichtung nach einem der vorangehenden Ansprüche, dadurch gekennzeichnet, dass das Gleitstück zwischen dem ortsfesten Element (82) und dem verschiebbaren Element (84, 84') angeordnete vorstehende Teile aufweist, um das Einziehen des Hebels (40) durch Reiben abzudämpfen.
